# FASCICULE DE BREVET EUROPEEN

(11) **EP 2 935 484 B1**
(45) Date de publication et mention de la délivrance du brevet: **21.11.2018**
(21) Numéro de dépôt: 13818338.9
(22) Date de dépôt: 18.12.2013
(51) Int. Cl.: C09D 133/14, C08J 3/07, C08G 71/04, C08L 33/14, C08F 220/28

(54) **RESINE ORGANIQUE PORTEUSE DE GROUPEMENTS CARBONATES CYCLIQUES ET DISPERSION AQUEUSE POUR POLYURETHANES RETICULES**
ORGANISCHES HARZ MIT CYCLISCHEN CARBONATGRUPPEN UND WÄSSRIGE DISPERSION FÜR VERNETZTE POLYURETHANE
ORGANIC RESIN BEARING CYCLIC CARBONATE GROUPS AND AQUEOUS DISPERSION FOR CROSSLINKED POLYURETHANES

(30) Priorité: 19.12.2012 FR 1262301
(43) Date de publication de la demande: 28.10.2015
(73) Titulaire: Arkema France, 92700 Colombes (FR)
(72) Inventeur: PIERRE, Aurélie, F-75018 Paris (FR); DELMAS, Gregory, F-60300 Senlis (FR); COGORDAN, Frank, F-75019 Paris (FR); BETREMIEUX, Isabelle, F-60580 Coye La Foret (FR)
(74) Mandataire: Killis, Andréas
(86) Numéro de dépôt international: PCT/FR2013/053154
(87) Numéro de publication internationale: WO 2014/096696

(56) Documents cités:
- EP-A2- 0 337 926
- WO-A1-97/23516
- US-A1- 2012 316 286

## Description

La présente invention concerne une résine spécifique, en particulier acrylique, vinylique ou acrylique-vinylique, portant des groupements carbonates cycliques et des groupements carboxyliques, laquelle résine est apte à former une dispersion aqueuse sans tensioactif, une dispersion aqueuse la comprenant, un procédé de préparation de cette dispersion aqueuse et des compositions réticulables aqueuses en particulier de revêtements, comprenant ladite résine ou dispersion aqueuse pour la préparation de polyuréthanes réticulés sans aucun usage d'isocyanate.

Plus particulièrement, la présente invention concerne l'obtention de polyuréthanes (PU) réticulés à partir d'un système réactif à deux composants, l'un étant la résine à fonctions carbonates cycliques de l'invention en dispersion en milieu aqueux et l'autre un agent réticulant parmi les polyamines portant des groupements amines primaires et/ou secondaires, ceci sans besoin d'isocyanates qui sont généralement associés aux polyols pour l'obtention des polyuréthanes par voie courante.

Il est déjà bien connu comment obtenir des polyuréthanes réticulés à partir d'un système bicomposant en milieu solvant organique ou en milieu aqueux en dispersion, à partir d'une résine polyol par réaction avec un polyisocyanate. Plus particulièrement, des polyols acryliques sont connus pour des applications de revêtements compte tenu de leurs meilleures performances, en particulier au vieillissement. Ces polyols sont des copolymères d'un mélange de monomères acryliques comprenant un monomère hydroxy alkyl (méth)acrylate, tel que l'hydroxy éthyl (méth)acrylate (HE(M)A) ou l'hydroxypropyl (méth)acrylate ou l'hydroxybutyl (méth)acrylate.

L'inconvénient essentiel de ces systèmes de l'état de la technique est lié au fait qu'un isocyanate (polyisocyanate) est indispensable comme agent réticulant de ces systèmes bicomposants polyuréthanes réticulés, à base de résines acryliques polyols. En effet, cette utilisation pose des problèmes de toxicité, de sécurité et de nocivité pour la santé humaine et pour l'environnement en général, problèmes qui imposent des contraintes lourdes concernant leur manipulation, même en milieu aqueux qui devient ainsi de plus en plus compliquée et coûteuse. Compte tenu de leur toxicité et de leur préparation à partir de matières premières également toxiques et nocives pour l'environnement, comme le phosgène avec émission d'acide chlorhydrique également nocif pour l'environnement, cette chimie, basée sur l'utilisation des isocyanates, a besoin d'être remplacée par des solutions plus amicales à l'homme et à son environnement et qui respectent l'environnement et la santé humaine, comme le développement durable à partir de nouvelles matières premières qui le permettent.

D'autre part, en plus du problème de santé et d'environnement, l'utilisation d'un système réticulable polyol-isocyanate est très sensible aux conditions d'application que cela soit en milieu solvant ou aqueux (consommation d'isocyanate encore plus importante) avec consommation d'une partie des fonctions isocyanates par l'eau résiduelle dans un milieu solvanté ou par l'eau en milieu aqueux avec une stoechiométrie difficile à contrôler ayant une conséquence sur la reproductibilité des performances finales et conduisant à une surconsommation d'isocyanate par rapport à la stoechiométrie nécessaire. La consommation d'isocyanate dans le système par l'humidité ambiante ou par l'eau en milieu aqueux, avec des réactions secondaires (décarboxylation et formation de polyamines transformées en polyurées) peut affecter la structure et performances finales du revêtement. En particulier, le dégagement de CO₂ par réaction avec l'eau conduit à la formation de bulles de CO₂ (défauts) dans le revêtement final, en particulier dans le cas de revêtements épais. Ceci est une limitation importante du système polyol-isocyanate classique en termes d'épaisseur maximale sèche possible sans ledit défaut (bulles CO₂) pour un revêtement de PU classique. Cette performance d'épaisseur sèche maximale sans ledit défaut s'appelle « la limite de piqûre » mesurée par le test de la limite de piqûre tel que défini dans la partie expérimentale. Dans les systèmes de revêtement à base de PU classique (à base d'isocyanates), cette épaisseur maximale est au mieux de 70 µm. Dans les revêtements selon l'invention, il n'y a pas ces défauts et donc pas de limitation. L'autre inconvénient des isocyanates dans ces revêtements est leur impact élevé sur le prix de revient, en particulier accentué par la surconsommation d'isocyanate par la réaction secondaire avec l'eau. Des systèmes bicomposants nouveaux sont déjà connus de l'état de la technique sans usage d'un polyisocyanate (appelés NIPU : non isocyanate PU) pour remplacer les systèmes PU à base de polyol-polyisocyanate. Ils sont à base de résines portant des groupements carbonates cycliques réticulables par une polyamine.

Plus particulièrement, BE 1009543 décrit un système à base de résine acrylique fonctionnalisée carbonate, obtenue par polymérisation en solution, avec réticulation par une polyamine primaire pour applications clear coat en milieu solvanté.

US 2012/0251730 décrit une composition solvantée bi-composant capable de sécher sans utilisation de polyisocyanates ou sans résines de type mélamine-formaldéhyde comme réticulants. Elle est constituée d'un copolymère obtenu par polymérisation radicalaire et contenant au moins un groupement carbonate cyclique, d'une polyamine possédant au moins deux groupements amines primaires et secondaires, optionnellement au moins un solvant, pigment et additif. Les exemples montrent un film ayant une dureté intéressante, mais ne permettent pas d'obtenir des compositions à faible taux de COV (COV : composés organiques volatils en français et VOC volatile organic compounds en anglais).

WO 2011/035982 décrit un système à base de résines acryliques dispersibles dans l'eau à fonctionnalité carbonate pour réticulation avec des polyamines, la synthèse étant réalisée en milieu solvant. La dispersibilité dans l'eau n'est obtenue qu'en utilisant un tensioactif polymérisable.

US 2012/316286 décrit un liant similaire hydrodispersible à base d'un copolymère vinylique obtenu à partir d'un monomère fonctionnalisé carbonate cyclique, d'un émulsifiant monomère et d'un autre comonomère qui permet l'obtention des dispersions aqueuses.

Bien qu'un système tel que décrit dans les documents cités de l'état de la technique permette a priori l'obtention de polyuréthanes (PU) sans faire usage d'un polyisocyanate, plusieurs problèmes supplémentaires sont à surmonter en plus de ceux cités ci-haut. En particulier, en milieu solvant, une résine acrylique portant des fonctions carbonates cycliques a une viscosité beaucoup plus élevée qu'une résine équivalente hydroxylée pour le même taux massique en monomère porteur de la fonction correspondante, ce qui signifie une viscosité significativement plus élevée pour le même taux molaire (ou même indice exprimé en équivalents mg KOH/g). Ceci a comme conséquence la limitation du taux d'extrait sec (ou des solides) dans la composition réticulable, ceci afin de pouvoir garder une viscosité constante et adaptée, paramètre essentiel pour les applications des revêtements en milieu solvant. En milieu solvanté, l'introduction de fonctions carbonates augmente la viscosité, ce qui rend difficile le développement des résines à haut extrait sec et donc à bas taux de COV. L'émulsification sous forme de dispersion aqueuse est une solution à ce problème.

Au moment où les réglementations sur la réduction des COV se durcissent, il n'est pas connu dans l'état de la technique de solutions satisfaisant ce problème. Donc, il y a un besoin de nouvelles résines, en particulier acryliques, fonctionnalisées carbonates aptes à former des dispersions aqueuses stables et permettant la formulation de revêtements aqueux et en particulier de peintures, vernis, encres, adhésifs, colles, mastics à basse teneur en COV et avec une dispersion aqueuse ainsi obtenue adaptée à l'application dans les revêtements en milieu aqueux.

Donc, le problème consiste d'abord à trouver une résine spécifiquement sélectionnée sans besoin d'utiliser des isocyanates, portant des groupements carbonates cycliques ayant un taux élevé de solides en milieu solvant organique, apte à former une dispersion aqueuse stable utilisable dans un système bicomposant spécifique, réticulable à température relativement basse allant de l'ambiante (20-25°C) à 150°C, avec une polyamine comme agent réticulant et ayant un taux de COV faible et un extrait sec (taux de solides) allant de 30 à 60% et sans affecter l'application en revêtements réticulables en milieu aqueux. Ce système spécifique tel que ciblé doit être un nouveau système bicomposant polyuréthane réticulable sans aucun usage d'isocyanate et, de ce fait et par le besoin de réduire le taux de COV, il doit être respectueux de l'environnement et de la santé, et en particulier il doit être non-sensible à l'eau et avoir des performances des revêtements polyuréthanes ainsi obtenus, pas affectées par ce nouveau système de manière significative ou avoir des performances similaires, sinon identiques, à celles d'un système polyol-polyisocyanate comparable de l'état de la technique.

Plus particulièrement, la présente invention permet, par une sélection particulière de la composition des monomères et de la structure spécifique de ladite résine, d'avoir un taux de solides élevé en solution en milieu organique de la résine obtenue par rapport à une résine polyol standard de l'état de l'art et une bonne aptitude à former des dispersions aqueuses stables et utilisables dans des systèmes aqueux bicomposants réticulables.

Ainsi, le système réticulable de l'invention vise un système à faible taux de COV et à haut extrait sec (ou taux de solides) sans affectation des conditions d'application du revêtement (viscosité non affectée malgré un taux de solides élevé).

Parmi les principaux avantages liés au nouveau système selon la présente invention, on peut citer les suivants :
- obtention de revêtements PU avec des propriétés inhérentes à ce type de revêtement, sans utilisation d'isocyanates, en particulier obtention de revêtements épais sans défauts liés à cette utilisation et avec des conditions améliorées d'hygiène et de sécurité et avec respect de l'environnement et du moins sans affectation (de manière significative) des performances essentielles dudit revêtement ou maintien à un état de performances similaire, sinon identique, à celles d'un système polyol-polyisocyanate comparable de l'état de la technique,
- réticulation à relativement basse température et en particulier dans une plage allant de l'ambiante à 150°C, éventuellement à l'aide d'un catalyseur adapté,
- formulation de revêtements, en particulier de peintures, vernis, encres, adhésifs, colles, mastics à hauts extraits secs (taux de solides) en conformité par rapport aux tendances des réglementations en vigueur sur les COV,
- possibilité d'associer un deuxième agent réticulant réactif avec les fonctions hydroxy générées en position β, lors de la réaction de réticulation entre les fonctions amines d'une polyamine et les cycles carbonates (par ouverture) portés par ladite résine de l'invention et ainsi augmenter la densité de réticulation avec un système hybride par exemple par réaction avec des réticulants supplémentaires de type anhydride ou silane bloqué ou mélamine ou autres,
- possibilité d'utiliser comme agents réticulants des polyamines d'origine biosourcée telles que les dimères diamines à base d'amines grasses d'origine renouvelable et donc d'augmenter le taux (la quantité) de carbone renouvelable dans la formulation avec une possibilité d'amélioration du cycle de vie du produit,
- possibilité d'utiliser, comme diluant de la résine lors de sa dispersion, un diluant réactif avec l'agent réticulant polyamine permettant ainsi l'ajustement de la dilution de la résine, un taux de solides final plus élevé (taux de COV très faible) et une plus grande densité de réticulation avec un diluant réactif multifonctionnel, avec apport possible de propriétés spécifiques supplémentaires par ces diluants réactifs,
- diminution du coût global de la formulation par rapport au système polyol-isocyanate,
- séchage rapide et maintien des bonnes propriétés du film de revêtement obtenu, malgré le faible taux de COV,
- bonnes performances d'application et, en particulier, en termes de durabilité, y compris en termes de corrosion, compromis dureté/flexibilité, adhérence sur substrat, résistance chimique et tenue thermique.

Par faible taux de COV, on considère dans la présente invention, un taux inférieur à 250 g/l, de préférence inférieur à 200 g/l de composés organiques volatils, en particulier ayant une température d'ébullition (Teb) inférieure à 250°C à pression atmosphérique.

La présente invention couvre donc comme premier objet une résine spécifique portant des fonctions carbonates et des fonctions carboxyliques avec des indices (taux) spécifiques de carbonate et d'acide.

Le deuxième objet de l'invention concerne une dispersion aqueuse comprenant ladite résine selon l'invention, en particulier sans aucun tensioactif.

Le troisième objet de l'invention concerne un procédé de préparation de ladite dispersion aqueuse.

Un autre objet de l'invention couvre une composition aqueuse réticulable de liant organique, comprenant ladite résine ou ladite dispersion aqueuse et plus particulièrement comprenant en plus au moins un agent réticulant parmi les polyamines de fonctionnalité d'au moins 2. Plus particulièrement, cette composition est une composition de revêtements.

L'invention couvre également l'utilisation de ladite résine de l'invention dans la préparation de polyuréthanes réticulés à partir de compositions aqueuses réticulables comme définies selon l'invention.

Finalement, fait également partie de l'invention, un polyuréthane réticulé qui résulte de la réticulation de ladite résine avec une polyamine de fonctionnalité d'au moins 2 ou d'une composition réticulable comme définie selon l'invention.

Donc, le premier objet de la présente invention concerne une résine organique soluble en milieu organique, ce qui signifie qu'elle est de structure linéaire ou ramifiée, laquelle comprend dans sa composition globale des unités de structure issues de :
a) au moins un monomère éthyléniquement insaturé porteur d'un groupement carbonate cyclique, de préférence sélectionné parmi les carbonates vinyliques ou les esters éthyléniquement insaturés porteurs d'un groupement carbonate cyclique,
b) au moins un monomère éthyléniquement insaturé porteur d'au moins un groupement acide carboxylique,
c) au moins un monomère éthyléniquement insaturé de nature hydrophobe ayant une valeur d'hydrophobie estimée par le logarithme du coefficient de partage entre octanol et eau (Kow), avec logKow calculé avec le logiciel 'Estimation Program Interface Suite KowWin version 4.11' de Syracuse Research Corporation (SRC), d'au moins 3, de préférence d'au moins 3,5, plus préférentiellement d'au moins 4 et encore plus préférentiellement d'au moins 4,5, et ledit monomère c) comprenant au moins un groupement aliphatique linéaire ou ramifié comportant au moins 6 atomes de carbone et/ou au moins une structure cycloaliphatique avec au moins 6 atomes de carbone, de préférence de 6 à 12 atomes de carbone,
d) en option, au moins un autre monomère éthyléniquement insaturé différent desdits monomères a), b) ou c) et ne portant aucun groupement susceptible de réagir avec un groupement carbonate ou acide carboxylique mais également aucun groupement susceptible de réagir avec un groupement fonctionnel d'un autre monomère composant de ladite résine, toute réaction de réticulation dans la préparation de ladite résine étant exclue,
ladite résine ayant globalement :
- un indice d'acide d'au moins 10, de préférence de 15 à 50, plus préférentiellement de 15 à 40 mg KOH/g par rapport à la résine sèche et
- un taux de groupements carbonates cycliques allant de 0,5 à 3,5 mmol/g, de préférence de 0,9 à 3 mmol/g, plus préférentiellement de 1,5 à 2,5 mmol/g par rapport à la résine sèche,
et de préférence ladite résine ayant une valeur globale d'hydrophobie basée sur le logarithme du coefficient de partage entre l'octanol et l'eau, en particulier estimée par la moyenne en poids de logKow sur l'ensemble des monomères constituants, , d'au moins 1,5, de préférence d'au moins 1,6, avec logKow des monomères constituants, calculé comme défini ci-haut pour monomère c).

D'une manière générale, un monomère « hydrophobe » est un monomère ayant peu d'affinité avec l'eau ou qui est peu soluble dans l'eau. Une méthode d'estimation de cette hydrophobie est celle de mesure du coefficient de partage de la substance à évaluer, entre l'octanol et l'eau, avec l'hydrophobie exprimée en logarithme de ce coefficient de partage. La valeur d'hydrophobie logkow pour un monomère est une estimation calculée du logarithme du coefficient de partage (log P) entre l'octanol et l'eau, par la méthode de contribution des atomes et des fragments structuraux de la molécule, en utilisant pour cette estimation le logiciel (programme d'estimation) EPI (Estimation Program Interface) Suite® appelé KowWin de SRC (Syracure Research Corporation). La méthode et programme epi 4.11 utilisé pour ce calcul (estimation) de logKow pour les monomères, sont disponibles à l'adresse http://www.epa.gov/oppt/exposure/pubs/episuite.htm. Cette méthodologie est décrite par W. M. Meylan et P.H. Howard en 1995 dans « Atom/fragment contribution method for estimating octanol-water partition coefficients » dans Pharm. Sci. 84:83-92. Le coefficient de partage P correspond au rapport de la concentration chimique dans la phase octanol par rapport à la concentration chimique dans la phase aqueuse dans un système avec deux phases en équilibre. Concernant un copolymère, en particulier tel qu'une résine définie selon l'invention, la valeur globale d'hydrophobie selon l'invention, basée sur le logarithme du coefficient de partage octanol/eau, est définie comme étant la valeur moyenne en poids sur l'ensemble des monomères composants de la résine et elle est en particulier estimée par la moyenne en poids sur l'ensemble de monomères composants, des valeurs logKow individuelles calculées par la méthode KowWin, comme décrite ci-haut et correspond donc, selon cette définition à :
valeur globale d'hydrophobie : ∑ᵢ[xⱼ*(logKow)ᵢ] avec,
∑ᵢ : sommation sur j monomères composants
xⱼ : fraction en poids du monomère i dans ledit copolymère,
(logKow)ₗ: valeur d'hydrophobie calculée par la méthode KowWin pour ledit monomère i, avec Kow correspondant au coefficient calculé de partage octanol/eau et logKow étant le logarithme de ce coefficient.

Le terme utilisé ci-haut « résine soluble en milieu organique » signifie en fait que ladite résine n'a aucune structure réticulée, auquel cas (si réticulée) elle serait insoluble dans tout solvant (milieu organique). Plus précisément, le fait que ladite résine est soluble signifie qu'elle a une structure linéaire ou ramifiée, donc qui est soluble dans au moins un solvant et donc ladite résine ne peut pas avoir de structure réticulée (exclue).

Selon une option préférée, ledit monomère c) comprend au moins un groupement aliphatique linéaire ou ramifiée comportant au moins 12 atomes de carbone, plus particulièrement de 12 à 36 atomes de carbone et/ou au moins une structure cycloaliphatique avec de 6 à 12 atomes de carbone. Plus particulièrement, ledit monomère c) est sélectionné parmi : au moins un (méth)acrylate d'alkyle, ledit alkyl, linéaire ou ramifié, comprenant au moins 6 atomes de carbone, de préférence au moins 12 atomes de carbone, plus particulièrement de 12 à 36 atomes de carbone ou parmi au moins un ester d'acides gras en C₁₈ à C₃₆ avec un hydroxyalkyl (méth)acrylate ou au moins un ester de vinyl alcool avec au moins un acide linéaire ou ramifié comportant au moins 6 atomes de carbone, de préférence au moins 9 atomes de carbone, plus particulièrement de 9 à 36 atomes de carbone.

Encore plus particulièrement, ledit monomère c) est sélectionné parmi au moins un monomère du groupe composé de : (méth)acrylate de lauryle, d'isodécyle, de décyle, de dodécyle, de stéaryle, de 2-éthylhexyle, d'isooctyle, de 2-octyle, de 2-octyl décyle, de tridécyle, de 2-octyl dodécyle, esters (monoesters) de dimères (C₃₆) d'acides gras avec un hydroxyalkyl (méth)acrylate, (méth)acrylate de glycidyl ester d'acide carboxylique saturé ramifié en C₁₀ et en particulier hautement ramifié en C₁₀ tel que le (méth)acrylate de glycidyl ester de l'acide versatique, ledit glycidyl ester étant connu sous le nom de « Cardura® E10 » ou (méth)acrylate de glycidyl ester d'acide carboxylique ramifié en C₉, en particulier hautement ramifié en C₉ ou vinyl esters d'acide carboxylique ramifié en C₁₀, en particulier hautement ramifié en C₁₀ tel que d'acide versatique connu sous le nom commercial VeoVa10 ou vinyl esters d'acide carboxylique saturé ramifié en C₉ en particulier hautement ramifié en C₉, connu sous le nom commercial de VeoVa 9, vinyl esters d'acide gras en C₁₈, de dimères (en C₃₆) d'acides gras ou monomères à structure de monoalkyl ester (ester-acide), avec alkyl en C₁ à C₁₈, d'acide m, p- hexahydrophtalique (ou d'acide 1,3 ou 1,4-cyclohexane dioïque monoesterifié par alkyl en C₁ à C₁₈) avec les hydroxyalkyl (méth)acrylates. Une structure ramifiée ou branchée comprend selon l'invention au moins un branchement par structure (chaîne ou molécule). Une structure hautement ramifiée signifie la présence d'au moins 2 et de préférence d'au moins 3 branchements par structure.

Selon une version plus particulière de la résine selon l'invention, celle-ci comprend des monomères hydrophobes sélectionnés parmi les esters méthacryliques d'alcools linéaires ou ramifiés en C₆ à C₃₆, plus préférentiellement de C₆ à C₁₈ et encore plus préférentiellement de C₈ à C₁₄ et/ou des esters vinyliques d'acides carboxyliques à chaîne linéaire ou ramifiée en C₆ à C₃₆, plus préférentiellement de C₆ à C₁₈ et encore plus préférentiellement de C₈ à C₁₄.

Selon une réalisation encore plus particulière, ladite résine de l'invention est à base d'une composition globale de monomères comprenant :
- comme monomère c), au moins un parmi : un ester (méth)acrylique d'alcool en C₈ à C₁₄, de préférence en C₁₂ et/ou au moins un ester vinylique d'acide en C₈ à C₁₄, de préférence en C₉ à C₁₂, et
- comme monomère a), au moins un parmi, les carbonates vinyliques et les esters éthyléniquement insaturés porteurs d'un groupement carbonate cyclique, en particulier parmi : le (méth)acrylate, l'itaconate, le maléate, le fumarate ou le tetrahydrophtalate de carbonate de glycérol, plus préférentiellement le (méth)acrylate de carbonate de glycérol.

Plus particulièrement, ladite résine peut avoir une masse moléculaire moyenne en nombre Mn, mesurée par GPC (en équivalent polystyrène, dans le THF) allant de 2 000 à 10 000 g/mol, de préférence de 3 000 et 10 000 g/mol, plus préférentiellement de 3 000 à 8 000 g/mol et encore plus préférentiellement de 3 000 à 7 000 g/mol.

Selon un mode particulier de l'invention, ladite résine est sous forme d'une solution dans un ou plusieurs diluants organiques, de préférence polaire(s), avec un taux de résine allant de 70 à 95%, de préférence allant de 80 à 95%. Un diluant polaire porte au moins un groupement polaire. Comme exemples convenables de tels diluants, on peut citer ceux comprenant des groupements : esters, éthers, sulfoxydes, amides, alcools, cétones ou aldéhydes. Selon une option particulière et préférée, ledit diluant organique est un diluant réactif et porte au moins deux fonctions réactives avec une amine primaire ou secondaire et de préférence lesdites fonctions sont sélectionnées parmi hydroxyles, en particulier pour réaction avec des mélamines et/ou acétoacétates et/ou époxydes et/ou ou secondaire et de préférence lesdites fonctions sont sélectionnées parmi hydroxyles, en particulier pour réaction avec des mélamines et/ou acétoacétates et/ou époxydes et/ou insaturations éthyléniques, ces dernières (insaturations) pouvant réagir par addition de Michael avec ladite amine primaire ou secondaire. De préférence, lesdites fonctions réactives dudit diluant sont choisies parmi époxy, acétoacétate ou insaturation éthylénique. Ledit diluant ne doit pas réagir avec les groupements fonctionnels portés par la résine de l'invention. En particulier, dans le cas où ledit diluant réactif porte des fonctions hydroxyles ou époxy, ledit diluant est ajouté à ladite résine à l'ambiante, après la préparation par polymérisation de ladite résine.

Ladite résine peut comprendre dans sa composition au moins un copolymère, c'est-à-dire un ou plusieurs copolymères, ledit copolymère pouvant être acrylique, vinylique ou vinylique-acrylique, correspondant à la définition globale de ladite résine, en particulier par sa composition et caractéristiques.

Selon un mode particulièrement préféré, ladite résine est un mélange d'au moins deux, plus particulièrement de deux copolymères différents P1 et P2, en particulier sélectionnés parmi les copolymères acryliques, vinyliques ou vinyliques-acryliques, avec :
P1 : de 50 à 95% en poids, de préférence de 60 à 95% en poids par rapport au poids global desdits deux copolymères (P1 + P2), d'un premier copolymère P1 pouvant ne pas comprendre de monomère éthyléniquement insaturé carboxylé selon b) comme défini ci-haut, de préférence ne comprenant pas ledit monomère carboxylé selon b) comme défini ci-haut,
P2 : de 5 à 50% en poids, de préférence de 5 à 40% en poids d'un deuxième copolymère (P2) comprenant au moins un monomère éthyléniquement insaturé carboxylé selon b) comme défini ci-haut,
avec P1 étant plus hydrophobe que P2, et P1 ayant un indice d'acide nul ou inférieur à celui de P2 d'au moins 10 mg KOH/g par rapport à la résine sèche et les deux copolymères ayant, à ± 1 % le même taux de groupements carbonates cycliques.

Selon une possibilité de ladite résine, lesdits copolymères ont des températures de transition vitreuse Tg1 et Tg2 sensiblement identiques, à ± 5°C et qui se situent dans une plage allant de -40 à 120°C. Toutes les températures de transition vitreuses telles que 2 passages de -50 à 110°C à 10°C/min. Selon une deuxième possibilité, lesdits copolymères ont des températures de transition vitreuse différentes, de préférence avec un desdits copolymères P1 ou P2, ayant une Tg élevée, en particulier supérieure à 40°C, plus particulièrement supérieure à 40°C et ne dépassant pas 120°C et l'autre ayant une Tg plus basse. Plus particulièrement, selon cette deuxième possibilité et selon une première option dans cette possibilité, ledit copolymère ayant ladite Tg élevée est ledit copolymère P1 tel que défini ci-haut selon l'invention et ledit copolymère ayant ladite Tg plus basse est ledit copolymère P2 tel que défini également ci-haut selon l'invention. Selon une deuxième option dans cette possibilité, lesdites Tg élevée et plus basse sont inversées par rapport aux copolymères P1 et P2. Ainsi, ledit copolymère ayant ladite Tg élevée est le copolymère P2 tel que défini ci-haut selon l'invention et ledit copolymère ayant ladite Tg plus basse est le copolymère P1, également tel que défini ci-haut selon l'invention.

Concernant le monomère b), éthyléniquement insaturé et porteur d'au moins un groupement acide carboxylique (-CO₂H), composant essentiel de la résine de l'invention, il peut être sélectionné parmi : acide acrylique ou méthacrylique, acide et anhydride itaconique, acide et/ou anhydride maléique, acide fumarique (isomère de l'acide maléïque), acide et/ou anhydride tetrahydrophtalique (acide/anhydride THP), hémi-esters de diacide carboxylique avec un hydroxyalkyl (méth)acrylate, ledit alkyl allant de C₂ à C₄ et pouvant éventuellement être alcoxylé, en particulier par alcoxy en C₂ et/ou C₃ et/ou C₄ ou parmi les hémi-esters de diacide carboxylique avec un oligomère monohydroxylé de polyéther-mono(méth)acrylate ou de polyester-mono(méth)acrylate, de préférence les oligomères polyéthers diols ou polyesters diols servant de base à ces oligomères (méth)acrylés porteur d'une fonction acide carboxylique ayant une masse moléculaire moyenne en nombre Mn (calculée par mesure des fonctions terminales) inférieure à 1 000 et de préférence inférieure à 500. Les monomères de type b) préférés sont l'acide acrylique et/ou méthacrylique et l'acide itaconique et plus préférentiellement l'acide acrylique et/ou méthacrylique.

Les monomères de type d), comme définis ci-haut, sont des composants optionnels de la résine de l'invention et sont présents pour ajuster les performances finales de la résine en fonction de son utilisation. Ils sont différents des monomères de type a), b et c) et peuvent porter des groupements fonctionnels différents de ceux des monomères de type a) et b) et de ce fait ne porte aucun groupement susceptible de réagir avec un groupement carbonate ou acide carboxylique mais également aucun groupement susceptible de réagir avec un groupement fonctionnel d'un autre monomère composant de ladite résine, toute réaction de réticulation dans la préparation de ladite résine étant exclue.

Cela signifie que la composition de la résine est choisie de telle manière qu'aucune réaction interne (de réticulation) ne puisse avoir lieu entre deux monomères composants de ladite résine. En fait, aucune réaction de réticulation interne dans ladite résine ne doit avoir lieu par le fait d'un seul monomère ou par le fait de deux ou plusieurs monomères réactifs entre eux. Par définition, ladite résine est soluble en milieu organique et donc ne peut pas être sous forme réticulée dans sa structure interne.

Comme exemples de monomères potentiels de type d), on peut citer les suivants, sous condition de différentiation par rapport aux monomères a), b) et c) choisis de la résine et les conditions exposées ci-haut : monomères vinyl aromatiques, monomères porteurs de groupement amide tel que l'acrylamide, monomères porteurs de groupement uréido, monomères porteurs des groupements acétoacétoxy, monomères éthyléniquement insaturés comprenant un groupement aliphatique linéaire ou ramifié ou cycloaliphatique ayant un nombre d'atomes de carbone inférieur à 6.

La préparation de la résine de l'invention peut être réalisée par polymérisation radicalaire en solution en milieu organique, de préférence dans un diluant organique pouvant réagir avec une amine primaire ou secondaire, telle que définie ci-haut, sous condition que ledit diluant réactif ne puisse pas réagir avec des groupements fonctionnels portés par ladite résine, en particulier durant la polymérisation. Dans le cas où ledit diluant porte des fonctions telles que hydroxy ou époxy pouvant réagir avec des groupements (par exemple acide carboxyliques b)) de ladite résine, dans ce cas, ledit diluant réactif est rajouté après polymérisation et dans des conditions évitant une telle réaction.

Le deuxième objet de l'invention concerne une dispersion aqueuse de résine, laquelle dispersion comprend au moins une résine telle que définie selon l'invention décrite ci-haut sous forme totalement ou partiellement neutralisée. Totalement ou partiellement neutralisée se réfère au groupement acide carboxylique de ladite résine. Selon une préférence particulière, ladite dispersion est exempte de tout tensioactif. Ceci signifie que ladite résine est apte par sa composition et structure spécifique à former une dispersion stable sans besoin d'aucun tensioactif.

La neutralisation peut être réalisée avec une base organique, laquelle dans les conditions de neutralisation neutralise sélectivement les groupements acides (carboxyliques) de ladite résine sans affecter les autres (que acides) groupements de ladite résine et de préférence avec une amine tertiaire, plus préférentiellement porteuse d'au moins un groupement hydroxy, comme par exemple la triéthanol amine ou la diméthyl éthanol amine.

Selon un mode particulier, ladite dispersion est partiellement neutralisée avec un taux de neutralisation d'au moins 30% et de préférence d'au moins 40% par rapport aux fonctions ou groupements carboxyliques de ladite résine. Ladite dispersion aqueuse de résine peut avoir un taux de solides allant de 30 à 60%, de préférence de 40 à 60%. Il faut noter que dans le cas où ledit diluant est réactif, ledit taux de solides englobe ledit diluant réactif. Ce taux peut être mesuré selon méthode ISO3251.

Un troisième objet de la présente invention concerne un procédé de préparation d'une dispersion aqueuse telle que définie ci-haut, lequel procédé comprend une étape de préparation de ladite résine telle que définie selon l'invention sous forme de solution dans un ou plusieurs diluants organiques, de préférence polaire(s), suivie d'une étape de neutralisation partielle ou totale et puis d'une étape de dispersion dans l'eau, avec en option une étape d'élimination finale dudit diluant organique, en particulier s'il est non réactif, avec une amine primaire ou secondaire et une étape d'ajustement du taux des solides et de la viscosité par dilution dans l'eau.

Plus particulièrement, ledit procédé comprend les étapes suivantes :
i) préparation d'une résine telle que définie selon l'invention, en solution dans un ou plusieurs diluant(s) organique(s), de préférence polaire,
ii) en option, dilution de ladite résine afin d'ajuster la viscosité de la solution de résine,
iii) neutralisation partielle ou totale de l'acidité de ladite résine, de préférence avec une base organique, laquelle dans les conditions de neutralisation neutralise sélectivement les groupements acides (carboxyliques) de ladite résine sans affecter les autres (que acides) groupements de ladite résine,
iv) préparation d'une dispersion de ladite solution de résine en milieu aqueux,
v) en option, élimination dudit diluant organique, en particulier s'il n'est pas réactif avec une amine primaire ou secondaire, de préférence par entraînement à la vapeur d'eau (appelé également « strippage » à la vapeur d'eau) ou entrainement (ou strippage) avec un gaz inerte,
vi) ajustement de la dilution finale ou du taux final de solides.

Ladite étape iv) du procédé décrit ci-haut de préférence comprend une étape d'addition d'eau dans ladite solution de résine, jusqu'à inversion de phase, suivie d'un ajustement de la dilution (par l'eau) par rapport au taux de solides visé.

Selon ce procédé de l'invention, ladite résine peut être une résine acrylique, vinylique ou vinylique-acrylique, y compris styrène-acrylique et dans ces cas, l'étape i) de préparation de ladite résine comprend une polymérisation radicalaire de monomères correspondants en milieu solvant.

Plus particulièrement, le procédé de l'invention concerne une résine qui est un mélange d'au moins deux, plus particulièrement de deux copolymères différents P1 et P2 tels que définis ci-haut et dans ce cas, ladite étape i) de préparation de ladite résine comprend la préparation séparée desdits copolymères P1 et P2 en solution, suivie de leur mélange ou en alternative, la préparation en deux étapes successives dans le même réacteur :
i1) d'abord la préparation en solution du premier copolymère P1 comme défini selon l'invention ci-haut, et ensuite
i2) la préparation du deuxième copolymère P2 défini selon l'invention ci-haut, dans le même réacteur contenant déjà ledit premier copolymère P1 en solution.

La présente invention concerne également une composition aqueuse réticulable de liant organique, laquelle composition comprend au moins une résine ou au moins une dispersion aqueuse de résine, telle que définie selon la présente invention. De préférence, une telle composition comprend en plus, un agent réticulant sélectionné parmi les polyamines primaires et/ou secondaires, ayant une fonctionnalité d'au moins 2.

Selon un cas particulièrement préféré, ladite composition est une composition de revêtement se comportant comme une composition réactive bicomposante. Ceci signifie que ladite polyamine réagit à partir de son addition dans la composition contenant ladite résine avec les groupements carbonates cycliques de ladite résine et évolue de manière irréversible avec le temps pour donner en final un polyuréthane réticulé formant un réseau polymère de masse moléculaire infinie et de structure tridimensionnelle. Par conséquent, dans un tel cas, l'addition de l'agent réticulant polyamine se fera juste avant l'utilisation finale et l'application de ladite composition réticulable.

Selon une autre option préférée de ladite composition réticulable de revêtement selon l'invention, ladite polyamine est bloquée par un agent labile et dans ce cas, ladite composition de revêtement se comporte comme une composition réticulable de revêtement monocomposant. Cela signifie que ladite composition reste stable au stockage à l'ambiante après addition de ladite polyamine ainsi bloquée. Dans un tel cas, la réticulation se fera lors de l'utilisation, par séchage lors de l'application-filmification de la composition, de manière à libérer l'agent bloquant labile, de préférence volatil et ainsi rendre possible la réaction de réticulation.

Selon un cas particulièrement préféré, ladite composition réticulable comprend ledit diluant organique de ladite résine en solution et ledit diluant est réactif avec ladite polyamine (agent réticulant) telle que définie ci-haut.

Lesdites polyamines de fonctionnalité d'au moins 2, convenables comme agents réticulants en milieu aqueux pour les compositions réticulables selon l'invention, sont des polyamines de structure linéaire ou ramifiée, porteuses d'au moins deux fonctions amines primaires et/ou secondaires, lesdites polyamines étant solubles ou dispersibles dans l'eau. Ces polyamines peuvent être monomères et/ou oligomères, ces derniers ayant une Mn ne dépassant pas 1 500 de préférence pas plus de 1 000. Elles peuvent être de structure aliphatique ou cycloaliphatique et éventuellement aromatique avec dans ce dernier cas (aromatique) la fonction amine étant de préférence portée par un substituant alkyle du noyau aromatique, comme par exemple la xylylène diamine (1,3- et 1,4-). Parmi les polyamines oligomères, on peut citer celles à base d'oligomères linéaires ou branchés (ramifiés) de Mn inférieure à 1 000, tels que polyéthers amines, par exemple de type Jeffamine®, oligomères acryliques aminés à base d'un monomère porteur d'une fonction amine primaire ou secondaire, polyéthylène amines (ou imines). Comme exemple de polyamine monomère, on peut citer les polyamines grasses et en particulier les polyamines grasses d'origine renouvelable telles que les dimères diamines à base d'amines grasses d'origine renouvelable (biosourcée), xylylène diamines ou isophorone diamines.

Ladite polyamine peut être rajoutée dans la composition réticulable aqueuse, soit telle quelle et être dispersée/solubilisée dans ladite composition, soit sous forme de solution ou dispersion aqueuse préformée, éventuellement en présence d'un tensioactif convenable. La neutralisation partielle de ladite polyamine, en particulier par un acide carboxylique volatil, tel que formique ou acétique ou carbonique (H₂CO₃), peut éventuellement faciliter la dispersion/solubilité en milieu aqueux et en même temps permettre un blocage réversible de ladite amine pour une composition réticulable ayant un comportement de système monocomposant et réagissant lors de la filmification et séchage de la formulation d'application du revêtement.

Parmi les polyamines préférées, on peut citer : polyéther amines, polyéthylène amines, oligomères acryliques aminés de Mn inférieure à 1 000, polyamines grasses, en particulier dimères diamines à base d'amines grasses d'origine renouvelable, xylylène diamines ou isophorone diamines.

Selon une version plus particulière, ladite composition réticulable de revêtement comprend en plus un deuxième agent réticulant de fonctionnalité d'au moins 2, réactif avec le groupement hydroxyle issu de la formation de la liaison uréthane par réaction entre un groupement carbonate cyclique et une fonction amine, de préférence ledit agent réticulant étant sélectionné parmi : mélamine, agents réticulants porteurs de fonctions époxy, de trialkoxysilanes ou d'acide carboxylique ou anhydride carboxylique. Par définition, ledit deuxième agent réticulant ne pourra réagir avec ledit groupement hydroxyle qu'après réaction entre un groupement carbonate cyclique et une fonction amine pour former une liaison uréthane et ledit groupement hydroxyle formé en position β.

La présente invention concerne également l'utilisation d'au moins une résine telle que définie selon l'invention dans la préparation de polyuréthanes réticulés sans utilisation de polyisocyanate à partir de compositions réticulables telles que définies ci-haut selon l'invention. Plus particulièrement, cette utilisation concerne des applications dans les revêtements aqueux, en particulier dans les peintures, les vernis colorés ou incolores, les encres, adhésifs, colles, mastics, traitement de fibres et de textiles.

De préférence, dans cette utilisation, lesdits revêtements sont :
- des revêtements de protection, en particulier des revêtements de finition ou des revêtements anticorrosion ou
- des revêtements de décoration, en particulier lesdits revêtements étant pour substrats parmi : métal tel que fer, acier, bronze, cuivre, aluminium, verre, bois y compris aggloméré ou contreplaqué, carton, plâtre, béton, plastique, composite, fibres naturelles, minérales ou synthétiques y compris textiles correspondant à ces fibres et céramique.

Ces revêtements ont des performances de haute résistance à l'usure et à l'abrasion et/ou usage intensif dans des conditions climatiques sévères d'usage externe continu et sont particulièrement adaptés pour des applications dans les domaines suivants : construction et rénovation pour ferroviaire (TGV, RER, métro), automobile, transport routier, naval, aéronautique, machinerie agricole, engins de travaux publics, éoliennes, plateformes pétrolières, containers, édifices métalliques, armatures métalliques, coil ou bâtiment y compris ameublement, parquet, menuiserie et charpentes.

Le dernier objet de l'invention concerne un produit final obtenu. Il s'agit d'un polyuréthane réticulé qui résulte de la réticulation d'au moins une résine de l'invention avec une polyamine ayant une fonctionnalité d'au moins 2 ou qui est obtenu à partir d'une composition aqueuse réticulable telle que définie ci-haut selon l'invention. Plus particulièrement, il s'agit d'un revêtement réticulé à base dudit polyuréthane.

Les exemples qui suivent sont donnés à titre d'illustration des produits de l'invention et de leurs performances et ne limitent en rien la portée des objets revendiqués.

### Partie expérimentale

### 1) Matières premières utilisées : ces matières sont présentées au tableau 1 ci-dessous

**Tableau 1 : Matières premières utilisées**

| Nom chimique ou nom commercial produit | Nom abrégé utilisé | Fournisseur | Fonction selon invention |
|---|---|---|---|
| Styrène | STY | Ciron | Monomère type d) |
| Acrylate de butyle | ABU | Arkema | Monomère type d) |
| Méthacrylate de méthyle | MAM | Evonik | Monomère type d) |
| Méthacrylate de carbonate de glycérol* (ou méthacrylate de propylène carbonate) | GCM | - | Monomère type a) |
| Méthacrylate de lauryle | MALAU | Sartomer | Monomère type c) |
| Acide acrylique | AA | Arkema | Monomère type b) |
| Luperox® DI | DTBP | Arkema | Générateur de radicaux (amorceur) |
| Luperox® 26 | TBPO | Arkema | Générateur de radicaux (amorceur) |
| Ektapro® EEP (3-éthoxypropionate d'éthyle) | EEP | Aldrich | Solvant (diluant non réactif) |
| Lonzamon® AATMP | AATMP | Lonza | Diluant réactif acétoacétylé (fonctionnalisé acétoacétoxy) de fonctionnalité = 7,76 mmol/g |
| Triéthanolamine | TEOH | Aldrich | Base organique de neutralisation |

| | | | |
|---|---|---|---|
| * préparé selon exemple 1 de US 7,414,147 | | | |

### 2) Préparation de résine porteuse de fonctions carbonates cycliques et de sa dispersion aqueuse

L'exemple exposé ci-dessous illustre la préparation de la résine et de la dispersion aqueuse correspondante, selon l'invention.

### Exemple 1 (selon l'invention)

### 1a) Résine

Dans un réacteur de 2 litres, on introduit 225 g de 3-éthoxypropionate d'éthyle (EEP). Sous balayage d'azote, le réacteur est porté à 150°C. En parallèle, on mélange (pour composition P1), 415 g de styrène, 54 g d'acrylate de butyle, 250 g de méthacrylate de méthyle, 369 g de méthacrylate de propylène carbonate (ou méthacrylate de carbonate de glycérol) et 36 g de méthacrylate de lauryle. On prépare une solution avec 33,7 g de peroxyde de ditertiobutyle (DTBP) et 16,9 g de peroctoate de tertiobutyle (TBPO) dans 51 g de EEP. Ces deux préparations sont alors introduites en parallèle dans le réacteur, sur une période de 3 h, avec la température maintenue à 150°C tout au long de cette période et sous balayage d'azote. A la fin de ces additions, le milieu est gardé à la même température pendant 1 h avant d'être refroidi à 135°C. Parallèlement, on prépare un mélange (pour composition P2) de 78 g de styrène, 54 g d'acrylate de butyle, 57 g de méthacrylate de méthyle, 123 g de méthacrylate de propylène carbonate, 11 g de méthacrylate de lauryle et 52 g d'acide acrylique. On prépare également une solution de 11,2 g de DTBP et de 5,6 g de TBPO dans 16,9 g de EEP. Ces deux préparations sont introduites dans le réacteur à 135°C sur une durée de 2 h. A la fin de ces additions, les lignes d'introduction sont rincées avec du solvant et la température est gardée constante à 135°C pendant 1 h supplémentaire. L'extrait sec de la résine (test sur 1 g, pendant 1 h à 125°C) est alors de 89,7% et son indice d'acide mesuré est égal à 26,3 mg KOH/g (vs calculé : 26,8). La masse moléculaire moyenne en nombre Mn de cette résine telle que mesurée par GPC, avec comme solvant le THF et avec étalonnage par des polystyrènes monodisperses, est de 3 600.

### 1b) Dispersion aqueuse

Une part de 259 g de cette résine (décrite ci-haut, en 1a)) est partiellement neutralisée par ajout de 72,2 ml d'une solution à 10% en volume, de triéthanolamine (TEOH) dans l'eau sur une période de 15 min. Durant cette étape, la température est maintenue à 70°C et la vitesse d'agitation est de 150 rpm (rotations par minute). Après 15 min d'agitation, le milieu est refroidi à 65°C et 148,2 ml d'eau sont introduits en 45 min sous une vitesse d'agitation de 250 rpm, avec inversion de phase au cours de cette addition. L'émulsion obtenue est ensuite diluée avec de l'eau pour obtenir un extrait sec de 45,6%, un pH de 7,5, une taille de particules mesurée de 162 nm avec un indice de polydispersité de 0,075.

### Exemple 2 (selon l'invention)

### 2a) Résine

Dans un réacteur de 2 litres, on introduit 150 g de 3-éthoxypropionate d'éthyle (EEP) et 75 g de Lonzamon® AATMP. Sous balayage d'azote, le réacteur est porté à 150°C. En parallèle, on mélange (pour composition P1), 460 g de styrène, 58 g d'acrylate de butyle, 278 g de méthacrylate de méthyle, 288 g de méthacrylate de propylène carbonate (ou méthacrylate de carbonate de glycérol) et 41 g de méthacrylate de lauryle. On prépare une solution avec 33,7 g de peroxyde de ditertiobutyle (DTBP) et 16,9 g de peroctoate de tertiobutyle (TBPO) dans 51 g de EEP. Ces deux préparations sont alors introduites en parallèle dans le réacteur, sur une période de 3 h, avec la température maintenue à 150°C tout au long de cette période et sous balayage d'azote. A la fin de ces additions, le milieu est gardé à la même température pendant 1 h avant d'être refroidi à 135°C. Parallèlement, on prépare un mélange (pour composition P2) de 87 g de styrène, 60 g d'acrylate de butyle, 63 g de méthacrylate de méthyle, 96 g de méthacrylate de propylène carbonate, 12 g de méthacrylate de lauryle et 57 g d'acide acrylique. On prépare également une solution de 11,2 g de DTBP et de 5,6 g de TBPO dans 16,9 g de EEP. Ces deux préparations sont introduites dans le réacteur à 135°C sur une durée de 2 h. A la fin de ces additions, les lignes d'introduction sont rincées avec du solvant et la température est gardée constante à 135°C pendant 1 h supplémentaire. L'extrait sec de la résine (test sur 1 g, pendant 1 h à 125°C) est alors de 87,9% et son indice d'acide mesuré est égal à 25,7 mg KOH/g (vs calculé : 28,1). La masse moléculaire moyenne en nombre Mn de cette résine telle que mesurée par GPC, avec comme solvant le THF et avec étalonnage par des polystyrènes monodisperses, est de 3550 g/mol.

### 2b) Dispersion aqueuse

Une part de 234 g de cette résine (décrite ci-haut, en 2a)) est partiellement neutralisée par ajout de 62,6 ml d'une solution à 10% en volume, de triéthanolamine (TEOH) dans l'eau sur une période de 15 min. Durant cette étape, la température est maintenue à 70°C et la vitesse d'agitation est de 150 rpm. Après 15 min d'agitation, le milieu est refroidi à 65°C et 160,4 ml d'eau sont introduits en 45 min sous une vitesse d'agitation de 250 rpm, avec inversion de phase au cours de cette addition. L'émulsion obtenue est ensuite diluée avec de l'eau pour obtenir un extrait sec de 46,3%, un pH de 7,5, une taille de particules mesurée de 175 nm avec un indice de polydispersité de 0,24.

**Tableau 2 : Composition de la résine de l'exemple 1 et hydrophobie des monomères**

| Résine exemple 1 | | | | |
|---|---|---|---|---|
| | Copolymère → | P1 | P2 | Total (Résine) |
| Composant | Hydrophobie logKow (Calculée selon KowWin) | % poids dans P1 vs résine (vs P1) | % poids dans P2 vs résine (vs P2) | % poids total vs résine |
| STY | 2,8950 | 27,7 (36,9) | 5,2 (20,8) | 32,9 |
| ABU | 2,2011 | 3,6(4,8) | 3,6 (14,4) | 7,2 |
| MAM | 1,2751 | 16,7 (22,3) | 3,8 (15,2) | 20,5 |
| GCM | 0,5214 | 24,6 (32,8) | 8,2 (32,8) | 32,8 |
| MALAU | 6,6772 | 2,4 (3,2) | 0,75 (3,0) | 3,15 |
| AA | 0,4415 | 0 (0) | 3,45 (13,8) | 3,45 |

**Tableau 3 : Caractéristiques de la résine de l'exemple 1**

| | Résine exemple 1 | |
|---|---|---|
| Copolymère -> | P1 | P2 |
| % poids/résine | 75 | 25 |
| Indice d'acide calculé (mg KOH/g) | 0 | 107,3 |
| Hydrophobie logKow moyenne poids | 1,843 | 1,545 |
| Taux carbonate calculé (mmol/g) | 1,76 | 1,76 |
| Indice d'acide global/résine calculé/mesuré (mg KOH/g) | 26,8/26,3 | |
| | | |
| Taux global carbonate/résine | | |
| calculé (mmol/g) | 1,76 | |
| Hydrophobie globale logKow Moyenne poids/résine | 1,769 | |

**Tableau 4 : Composition de la résine de l'exemple 2 et hydrophobie des monomères**

| Résine exemple 2 | | | | |
|---|---|---|---|---|
| | Copolymère → | P1 | P2 | Total (Résine) |
| Composant | Hydrophobie logKow (Calculée selon KowWin) | % poids dans P1 vs résine (vs P1) | % poids dans P2 vs résine (vs P2) | % poids total vs résine |
| STY | 2,8950 | 30,7 (40,9) | 5,8 (23,2) | 36,5 |
| ABU | 2,2011 | 3,9 (5,2) | 4,0 (16,0) | 7,9 |
| MAM | 1,2751 | 18,5 (24,7) | 4,2 (16,8) | 22,7 |
| GCM | 0,5214 | 19,2 (25,6) | 6,4 (25,6) | 25,6 |
| MALAU | 6,6772 | 2,7 (3,6) | 0,8 (3,2) | 3,5 |
| AA | 0,4415 | 0 (0) | 3,8 (15,2) | 3,8 |

**Tableau 5 : Caractéristiques de la résine de l'exemple 2**

| | Résine exemple 2 | |
|---|---|---|
| Copolymère -> | P1 | P2 |
| % poids/résine | 75 | 25 |
| Indice d'acide calculé (mg KOH/g) | 0 | 118,2 |
| Hydrophobie logKow moyenne poids | 1,987 | 1,652 |
| Taux carbonate calculé (mmol/g) | 1,37 | 1,37 |
| Indice d'acide global/résine calculé/mesuré (mg KOH/g) | 28,1/25,7 | |
| | | |
| Taux global carbonate/résine | | |
| calculé (mmol/g) | 1,37 | |
| Taux global de fonctionnalité du diluant réactif/résine calculé (mmol/g) | 0,39 | |
| Taux global de fonctionnalité réactive/résine calculé (mmol/g) | 1,76 | |
| Hydrophobie globale logKow Moyenne poids/P1+P2 | 1,903 | |

### 3) Méthodes et tests utilisés pour caractériser les résines et les performances des revêtements réticulés obtenus (conditions opératoires)

3.1) Mesure de l'extrait sec (taux de solides) de la résine: selon ISO3251 (1 g de résine en solution pendant 1 h à 125°C).
3.2) Indice d'acide de la résine : selon ISO2114
   Sinon et suivant indication par calcul selon bilan matière. Il est exprimé en mg de KOH par g de résine sèche.
3.3) Fonctionnalité en carbonate cyclique en mmol/g de résine, par le calcul des fonctions carbonates incorporées avec le monomère porteur de carbonate, par le bilan matière. Il est exprimé en mmol par g de résine sèche.
3.4) Taille moyenne de particule et indice de polydispersité : mesurés selon la norme ISO13321.
3.5) Mesure du pH de l'émulsion : réalisée selon la norme ISO976.
3.6) Mn, en particulier pour la résine de l'invention : par GPC dans le THF avec étalonnage à base d'étalons polystyrènes monodispersés avec Mn exprimée en équivalents Polystyrène.
3.7) Hydrophobie de la résine sèche : à partir de valeurs logKow calculées par la méthode (logiciel) KowWin (version epi 4.11 de SRC) pour les monomères composants et moyenne en poids calculée à partir de ces valeurs logKow, comme déjà expliqué dans la description.
3.8) Evaluation de la limite de piqure du revêtement

La présence (ou l'absence) de piqures ainsi que leurs cotations sont réalisées en évaluant le degré de cloquage selon la norme ISO 4628-2. Cette norme permet à la fois de quantifier la densité des piqures présentes (si présentes) sur le revêtement et d'en évaluer leur taille.

Pour mettre en évidence cette limite de piqure, on applique différents films à des épaisseurs sèches croissantes et on note l'épaisseur maximale sèche pour laquelle on obtient un film sans aucune piqure, c'est-à-dire c'est l'épaisseur limite maximale juste avant apparition de piqûre ou cloquage.

### 4) Préparation de la composition aqueuse réticulable de revêtement

### 4.1) Formulation des vernis incolores avec les dispersions aqueuses de l'exemple 1b) et 2b)

**Tableau 6 : Matières premières utilisées de formulation**

| Nom | Fournisseur | Fonction technique |
|---|---|---|
| Jeffamine® D230 | Huntsman | Agent réticulant polyéther polyamine de fonctionnalité 2 en amine primaire et de poids moléculaire 230 |
| C RAYVALLAC® A-2678 M | Arkema | Additif de surface |
| Coapur® 6050 | Coatex | Additif de rhéologie |

**Tableau 7 : Composition en poids des formulations de vernis incolore 2k réticulable (poids en g)**

| | Vernis 1 | Vernis 2 |
|---|---|---|
| Dispersion aqueuse de l'exemple 1b) | 69,82 | / |
| Dispersion aqueuse de l'exemple 2b) | / | 69,76 |
| Eau | 22,54 | 22,52 |
| CRAYVALLAC® A-2678M | 0,60 | 0,60 |
| Coapur® 6050 | 0,48 | 0,57 |
| Jeffamine® D230 | 6,56 | 6,55 |

### 4.2) Conditions opératoires de préparation des formulations de vernis et de la réticulation

On verse dans un récipient cylindrique (250 ml) la quantité de dispersion aqueuse de résine comme préparée ci-avant (1b) ou 2b)). Nous procédons, sous agitation à 500 rpm (avec Dispermat® CV) à température ambiante (20-25°C), à l'addition d'eau, de l'additif de surface, de l'additif de rhéologie et du réticulant polyamine. La formulation de vernis est ensuite appliquée sur un support acier type QD46 (Q-Panel) avec un applicateur Barecoater (Vitesse 3 correspondant à 20 mm/s) afin d'obtenir une épaisseur sèche contrôlée. Le vernis ainsi appliqué est d'abord séché à température ambiante (20-25°C à 50% HR) pendant 15 min avant d'être réticulé dans une étuve à une température de 90°C pendant une durée de 30 min.

### 5) Performances du revêtement vernis réticulé 2k

Les films de vernis polyuréthane réticulés ainsi obtenus présentent un bon aspect visuel avec une bonne filmification et un bon brillant.

Comme déjà décrit ci-haut, ces films représentatifs de l'invention ne présentent aucune piqûre (cloquage), après évaluation selon le test décrit contrairement aux films de revêtements polyuréthanes courants, obtenus avec des polyisocyanates en milieu aqueux et ayant des épaisseurs maximales sans piqûre d'au mieux 70 µm.

## Revendications

1. Résine organique soluble en milieu organique, **caractérisée en ce qu'**elle comprend dans sa composition globale, des unités de structure issues de :
a) au moins un monomère éthyléniquement insaturé porteur d'un groupement carbonate cyclique, de préférence sélectionné parmi les carbonates vinyliques ou les esters éthyléniquement insaturés porteurs d'un groupement carbonate cyclique,
b) au moins un monomère éthyléniquement insaturé porteur d'au moins un groupement acide carboxylique,
c) au moins un monomère éthyléniquement insaturé de nature hydrophobe ayant une valeur d'hydrophobie estimée par le logarithme du coefficient de partage entre l'octanol et l'eau logKow d'au moins 3, de préférence d'au moins 3,5, plus préférentiellement d'au moins 4 et encore plus préférentiellement d'au moins 4,5, avec logKow calculé avec le logiciel 'Estimation Program Interface Suite KowWin version 4.11', de Syracuse Research Corporation (SRC), selon la méthodologie décrite par W. M. Meylan et P. H. Howard en 1995 dans « Atom/fragment contribution method for estimating octanol-water partition coefficients » dans Pharm. Sci. 84 : 83-9 et ledit monomère c) comprenant au moins un groupement aliphatique linéaire ou ramifié comportant au moins 6 atomes de carbone et/ou au moins une structure cycloaliphatique avec au moins 6 atomes de carbone, de préférence de 6 à 12 atomes de carbone,
d) en option, au moins un autre monomère éthyléniquement insaturé différent desdits monomères a), b) ou c) et ne portant aucun groupement susceptible de réagir avec un groupement carbonate ou acide carboxylique mais également aucun groupement susceptible de réagir avec un groupement fonctionnel d'un autre monomère composant de ladite résine, toute réaction de réticulation dans la préparation de ladite résine étant exclue,
ladite résine ayant globalement :
- un indice d'acide d'au moins 10, de préférence de 15 à 50, plus préférentiellement de 15 à 40 mg KOH/g par rapport à la résine sèche et
- un taux de groupements carbonates cycliques allant de 0,5 à 3,5 mmol/g, de préférence de 0,9 à 3 mmol/g, plus préférentiellement de 1,5 à 2,5 mmol/g par rapport à la résine sèche,
de préférence ladite résine ayant une valeur globale d'hydrophobie basée sur le logarithme du coefficient de partage entre l'octanol et l'eau, en particulier estimée par la moyenne en poids de logKow sur l'ensemble des monomères constituants, , d'au moins 1,5, de préférence d'au moins 1,6, avec logKow des monomères constituants calculé comme défini ci-haut pour le monomère c).

2. Résine selon la revendication 1, **caractérisée en ce que** ledit monomère c) comprend au moins un groupement aliphatique linéaire ou ramifié comportant au moins 12 atomes de carbone, plus particulièrement de 12 à 36 atomes de carbone et/ou au moins une structure cycloaliphatique avec 6 à 12 atomes de carbone.

3. Résine selon la revendication 1 ou 2, **caractérisée en ce que** ledit monomère c) est sélectionné parmi : au moins un (méth)acrylate d'alkyle, ledit alkyle, linéaire ou ramifié, comprenant au moins 6 atomes de carbone, de préférence au moins 12 atomes de carbone, plus particulièrement de 12 à 36 atomes de carbone ou parmi au moins un ester d'acides gras en C₁₈ à C₃₆ avec un hydroxyalkyl (méth)acrylate ou au moins un ester de vinyl alcool avec au moins un acide linéaire ou ramifié comportant au moins 6 atomes de carbone, de préférence au moins 9 atomes de carbone, plus particulièrement de 9 à 36 atomes de carbone.

4. Résine selon l'une des revendications 1 ou 2, **caractérisée en ce que** ledit monomère c) est sélectionné parmi au moins un monomère du groupe composé de : (méth)acrylate de lauryle, d'isodécyle, de décyle, de dodécyle, de stéaryle, de 2-éthyl hexyle, d'isooctyle, de 2-octyl, de 2-octyl décyle, 2-octyl dodécyle, de tridécyle ou les esters de dimères (C₃₆) d'acides gras avec un hydroxyalkyl (méth)acrylate, le (méth)acrylate de glycidyl ester d'acide carboxylique saturé ramifié en C₁₀ et en particulier hautement ramifié en C₁₀, ou le (méth)acrylate de glycidyl ester d'acide carboxylique ramifié en C₉, en particulier hautement ramifié en C₉ ou les vinyl esters d'acide carboxylique ramifié en C₁₀ en particulier hautement ramifié en C₁₀ ou les vinyl esters d'acide carboxylique saturé ramifié en C₉, en particulier hautement ramifié en C₉, ou les vinyl esters d'acide gras en C₁₈ ou de dimères (en C₃₆) d'acides gras ou les monomères à structure cycloaliphatique, en particulier parmi : (méth)acrylate d'isorbonyle, d'isophoryle, de tertiobutylcyclohexyle, de 3,3,5-triméthylcyclohexyle, méthacrylate de cyclohexyle ou esters de monoalkyl ester, avec alkyl en C₁ à C₁₈, d'acide m, p- hexahydrophtalique (ou d'acide 1,3 ou 1,4-cyclohexane dioïque monoesterifié alkyl C₁ à C₁₈) avec les hydroxyalkyl (méth)acrylates.

5. Résine selon la revendication 1 ou 2, **caractérisée en ce qu'**elle comprend des monomères hydrophobes sélectionnés parmi les esters méthacryliques d'alcools linéaires ou ramifiés en C₆ à C₃₆, plus préférentiellement de C₆ à C₁₈ et encore plus préférentiellement de C₈ à C₁₄ et/ou des esters vinyliques d'acides carboxyliques à chaîne linéaire ou ramifiée en C₆ à C₃₆, plus préférentiellement de C₆ à C₁₈ et encore plus préférentiellement de C₈ à C₁₄.

6. Résine selon l'une des revendications 1 à 5, **caractérisée en ce qu'**elle est à base d'une composition globale de monomères comprenant :
- comme monomère c), au moins un parmi : un ester (méth)acrylique d'alcool en C₈ à C₁₄, de préférence en C₁₂ et/ou au moins un ester vinylique d'acide en C₈ à C₁₄, préférence en C₉ à C₁₂ et
- comme monomère a), au moins un parmi : les carbonates vinyliques et les esters éthyléniquement insaturés porteurs d'un groupement carbonate cyclique, en
particulier parmi le (méth)acrylate, l'itaconate, le maléate, le fumarate, le tetrahydrophtalatede carbonate de glycérol, plus préférentiellement le (méth)acrylate de carbonate de glycérol.

7. Résine selon l'une des revendications 1 à 6, **caractérisée en ce qu'**elle a une masse moléculaire moyenne en nombre Mn, mesurée par GPC (en équivalent polystyrène dans THF) allant de 2 000 à 10 000 g/mol, de préférence 3 000 et 10 000 g/mol, plus préférentiellement de 3 000 à 8 000 g/mol et encore plus préférentiellement de 3 000 à 7 000 g/mol.

8. Résine selon l'une des revendications 1 à 7, **caractérisée en ce qu'**elle est sous forme d'une solution dans un ou plusieurs diluants organiques, de préférence polaire, avec un taux de résine allant de 70 à 95%, de préférence allant de 80 à 95%.

9. Résine selon la revendication 8, **caractérisée en ce que** ledit diluant organique est un diluant réactif et qu'il porte au moins deux fonctions réactives avec une amine primaire ou secondaire, de préférence lesdites fonctions étant sélectionnées parmi : hydroxyles en particulier pour réaction avec des mélamines et/ou acétoacétates et/ou époxydes et/ou insaturations éthyléniques, ces dernières pouvant réagir par addition de Michael avec ladite amine.

10. Résine selon l'une des revendications 1 à 9, **caractérisée en ce qu'**elle comprend au moins un copolymère acrylique, vinylique ou vinylique-acrylique correspondant à la définition de ladite résine.

11. Résine selon la revendication 10, **caractérisée en ce qu'**elle est un mélange d'au moins deux copolymères différents P1 et P2, en particulier sélectionnés parmi les copolymères acryliques, vinyliques ou vinyliques-acryliques, avec :
P1 : de 50 à 95% en poids, de préférence de 60 à 95% en poids par rapport au poids global desdits deux copolymères d'un premier copolymère P1 pouvant ne pas comprendre de monomère éthyléniquement insaturé carboxylé selon b), de préférence ne comprenant pas ledit monomère carboxylé selon b),
P2 : de 5 à 50% en poids, de préférence de 5 à 40% en poids d'un deuxième copolymère comprenant au moins un monomère éthyléniquement insaturé carboxylé selon b),
avec P1 étant plus hydrophobe que P2, avec P1 ayant un indice d'acide nul ou inférieur à celui de P2 d'au moins 10 mg KOH/g et avec les deux copolymères ayant à ± 1%, le même taux de groupements carbonates cycliques.

12. Résine selon la revendication 11, **caractérisée en ce que** lesdits copolymères ont des températures de transition vitreuse Tg1 et Tg2 sensiblement identiques, à ± 5°C et qu'elles se situent dans une plage allant de -40 à 120°C, lesdites Tg étant mesurées par DSC après deux passages de -50°C à 110°C à 10°C/min.

13. Résine selon la revendication 11, **caractérisée en ce que** lesdits copolymères ont des températures de transition vitreuse différentes, de préférence avec un desdits copolymères P1 ou P2 ayant une Tg élevée, en particulier supérieure à 40°C, plus particulièrement supérieure à 40°C et ne dépassant pas 120°C et l'autre ayant une Tg plus basse, lesdites Tg étant mesurées par DSC après deux passages de -50°C à 110°C à 10°C/min.

14. Résine selon la revendication 13, **caractérisée en ce que** ledit copolymère ayant ladite Tg élevée est ledit copolymère P1 tel que défini selon la revendication 11 et que ledit copolymère ayant ladite Tg plus basse est ledit copolymère P2 tel que défini selon la revendication 11.

15. Résine selon la revendication 13, **caractérisée en ce que** ledit copolymère ayant ladite Tg élevée est le copolymère P2 tel que défini selon la revendication 11 et que ledit copolymère ayant ladite Tg plus basse est le copolymère P1 tel que défini selon la revendication 11.

16. Dispersion aqueuse de résine **caractérisée en ce qu'**elle comprend au moins une résine telle que définie selon l'une des revendications 1 à 15, sous forme totalement ou partiellement neutralisée.

17. Dispersion selon la revendication 16, **caractérisée en ce que** ladite dispersion est exempte de tensioactif.

18. Dispersion selon la revendication 16 ou 17, **caractérisée en ce qu'**elle est partiellement neutralisée avec un taux de neutralisation d'au moins 30% et de préférence d'au moins 40% par rapport aux fonctions ou groupements carboxyliques de ladite résine.

19. Procédé de préparation d'une dispersion aqueuse telle que définie selon l'une des revendications 16 à 18, **caractérisé en ce qu'**il comprend une étape de préparation de ladite résine telle que définie selon l'une des revendications 1 à 15 sous forme de solution dans un ou plusieurs diluants organiques, de préférence polaire(s), suivi d'une étape de neutralisation partielle ou totale et d'une étape de dispersion dans l'eau, avec en option, une étape d'élimination finale dudit diluant organique, en particulier s'il est non réactif avec une amine primaire ou secondaire et une étape d'ajustement du taux des solides et de la viscosité par dilution dans l'eau.

20. Procédé selon la revendication 19, **caractérisé en ce qu'**il comprend les étapes suivantes :
i) préparation d'une résine telle que définie selon l'une des revendications 1 à 15, en solution dans un ou plusieurs diluants organiques, de préférence polaire(s),
ii) en option, dilution de ladite résine afin d'ajuster la viscosité de la solution de résine
iii) neutralisation partielle ou totale de l'acidité de ladite résine, avec une base organique, laquelle dans les conditions de neutralisation neutralise sélectivement les groupements acides (carboxyliques) de ladite résine sans affecter les autres (que acides) groupements de ladite résine,
iv) préparation d'une dispersion de ladite solution de résine en milieu aqueux,
v) en option, élimination dudit diluant organique en particulier s'il n'est pas réactif avec une amine, de préférence par entraînement à la vapeur d'eau (ou « strippage » à la vapeur d'eau) ou entrainement (« strippage ») avec un gaz inerte,
vi) ajustement de la dilution finale ou du taux final de solides.

21. Procédé selon la revendication 20, **caractérisé en ce que** ladite étape iv) comprend une étape d'addition d'eau dans ladite solution de résine, jusqu'à inversion de phase, suivie d'un ajustement de la dilution par rapport au taux de solides visé.

22. Composition aqueuse réticulable de liant organique, **caractérisée en ce qu'**elle comprend au moins une résine telle que définie selon l'une des revendications 1 à 15 ou au moins une dispersion aqueuse de résine telle que définie selon l'une des revendications 16 à 18.

23. Composition selon la revendication 22, **caractérisée en ce qu'**elle comprend en plus un agent réticulant sélectionné parmi les polyamines primaires et/ou secondaires ayant une fonctionnalité d'au moins 2.

24. Utilisation d'au moins une résine telle que définie selon l'une des revendications 1 à 15, **caractérisée en ce qu'**il s'agit d'une utilisation dans la préparation de polyuréthanes réticulés sans utilisation de polyisocyanate, à partir de compositions réticulables telles que définies selon les revendications 22 ou 23.

25. Utilisation selon la revendication 24, **caractérisée en ce qu'**elle concerne des applications dans les revêtements aqueux, en particulier dans les peintures, vernis, les encres, adhésifs, colles, mastics, traitement de fibres et de textiles.

26. Polyuréthane réticulé, **caractérisé en ce qu'**il résulte de la réticulation d'au moins une résine telle que définie selon l'une des revendications 1 à 15 avec une polyamine ayant une fonctionnalité d'au moins 2 ou à partir d'une composition aqueuse réticulable telle que définie selon l'une des revendications 22 ou 23.

## Patentansprüche

1. Organisches Harz, welches in einem organischen Medium löslich ist,
**dadurch gekennzeichnet, dass** dieses in seiner globalen Zusammensetzung Struktureinheiten umfasst, die stammen von:
a) mindestens einem ethylenisch ungesättigten Monomer, das eine cyclische Carbonatgruppe trägt, vorzugsweise ausgewählt aus Vinylcarbonaten oder ethylenisch ungesättigten Estern, die eine cyclische Carbonatgruppe tragen,
b) mindestens einem ethylenisch ungesättigten Monomer, das mindestens eine Carbonsäuregruppe trägt,
c) mindestens einem ethylenisch ungesättigten Monomer hydrophober Natur mit einem Hydrophobiewert, der durch den Logarithmus des Teilungskoeffizienten zwischen Octanol und Wasser logKow gemessen wird, von mindestens 3, vorzugsweise von mindestens 3,5, bevorzugter von mindestens 4 und noch bevorzugter von mindestens 4,5, wobei logKow berechnet wird mit der Software "Estimation Program Interface Suite KowWin Version 4.11" der Syracuse Research Corporation (SRC) gemäß der Methodologie, die von W.M. Meylan et P.H. Howard, 1995, in "Atom/fragment contribution method for estimating ocatonol-water partition coefficients" in Pharm. Sci. 84: 83-9 beschrieben wird, und wobei das Monomer c) mindestens eine lineare oder verzweigte aliphatische Gruppe mit mindestens 6 Kohlenstoffatomen und/oder mindestens eine cycloaliphatische Struktur mit mindestens 6 Kohlenstoffatomen, vorzugsweise von 6 bis 12 Kohlenstoffatomen, umfasst,
d) gegebenenfalls mindestens einem anderen ethylenisch ungesättigten Monomer, das von den Monomeren a), b) oder c) verschieden ist und keine Gruppe trägt, die mit einer Carbonat- oder Carbonsäuregruppe reagieren kann, jedoch auch keine Gruppe, die mit einer funktionellen Gruppe einer anderen Monomerkomponente des Harzes reagieren kann, wobei jede Vernetzungsreaktion bei der Herstellung des Harzes ausgeschlossen ist, wobei das Harz global aufweist:
- einen Säureindex von mindestens 10, vorzugsweise von 15 bis 50, bevorzugter von 15 bis 40 mg KOH/g im Verhältnis zu dem getrockneten Harz, und
- einen Gehalt an cyclischen Carbonatgruppen von 0,5 bis 3,5 mmol/g, vorzugsweise von 0,9 bis 3 mmol/g, bevorzugter von 1,5 bis 2,5 mmol/g im Verhältnis zu dem getrockneten Harz,
wobei vorzugsweise das Harz einen globalen Hydrophobiewert auf der Basis des Logarithmus des Teilungskoeffizienten zwischen Octanol und Wasser, der insbesondere durch das Gewichtsmittel von logKow zu der Gesamtheit der Monomerbestandteile geschätzt wird, von mindestens 1,5, vorzugsweise mindestens von 1,6 aufweist, wobei logKow der Monomerbestandteile, wie im Vorstehenden für das Monomer c) definiert, berechnet wird.

2. Harz nach Anspruch 1,
**dadurch gekennzeichnet, dass** das Monomer c) mindestens eine lineare oder verzweigte aliphatische Gruppe mit mindestens 12 Kohlenstoffatomen, insbesondere von 12 bis 36 Kohlenstoffatomen, und/oder mindestens eine cycloaliphatische Struktur mit 6 bis 12 Kohlenstoffatomenen umfasst.

3. Harz nach Anspruch 1 oder 2,
**dadurch gekennzeichnet, dass** das Monomer c) ausgewählt ist aus: mindestens einem Alkyl(meth)acrylat, wobei das lineare oder verzweigte Alkyl mindestens 6 Kohlenstoffatome, vorzugsweise mindestens 12 Kohlenstoffatome, insbesondere von 12 bis 36 Kohlenstoffatomen umfasst, oder aus mindestens einem C₁₈-C₃₆-Fettsäureester mit einem Hydroxyalkyl(meth)acrylat oder mindestens einem Vinylalkoholester mit mindestens einer linearen oder verzweigten Säure mit mindestens 6 Kohlenstoffatomen, vorzugsweise mindestens 9 Kohlenstoffatomen, bevorzugter von 9 bis 36 Kohlenstoffatomen.

4. Harz nach einem der Ansprüche 1 oder 2,
**dadurch gekennzeichnet, dass** das Monomer c) aus mindestens einem Monomer der Gruppe ausgewählt ist, bestehend aus: Lauryl(meth)acrylat, Isodecyl, Decyl, Dodecyl, Stearyl, 2-Ethylhexyl, Isooctyl, 2-Octyl, 2-Octyldecyl, 2-Octyldodecyl, Tridecyl oder Estern von Dimeren (C₃₆) von Fettsäuren mit einem Hydroxyalkyl(meth)acrylat, Glycidylester(meth)acrylat einer gesättigten verzweigten C₁₀- und insbesondere hochverzweigten C₁₀-Carbonsäure, oder Glycidylester(meth)acrylat einer verzweigten C₉-, insbesondere hochverzweigten Cg-Carbonsäure, oder Vinylestern einer verzweigten C₁₀- und insbesondere hochverzweigten C₁₀-Carbonsäure, oder Vinylestern einer verzweigten C₉-, insbesondere hochverzweigten Cg-Carbonsäure, oder Vinylestern einer C₁₈-Carbonsäure oder Dimeren (C₃₆) von Fettsäuren oder Monomeren mit einer cycloaliphatischen Struktur, insbesondere aus: Isorbonyl(meth)acrylat, Isophoryl, tert.Butylcyclohexyl, 3,3,5-Trimethylcyclohexyl, Cyclohexylmethacrylat oder Estern von Monoalkylester, mit C₁-C₁₈-Alkyl, m,p-Hexahydropthalsäure (oder 1,3- oder 1,4-Cyclohexandionsäure, monoverestert durch C₁-C₁₈-Alkyl) mit Hydroxylalkyl(meth)acrylaten.

5. Harz nach Anspruch 1 oder 2,
**dadurch gekennzeichnet, dass** dieses hydrophobe Monomere umfasst, ausgewählt aus Methacrylestern von linearen oder verzweigten C₆-C₃₆-Alkoholen, bevorzugter C₆-C₁₈ und noch bevorzugter C₈-C₁₄, und/oder Vinylestern von C₆-C₃₆-Carbonsäuren mit linearer oder verzweigter Kette, bevorzugter C₆-C₁₈ und noch bevorzugter C₈-C₁₄.

6. Harz nach einem der Ansprüche 1 bis 5,
**dadurch gekennzeichnet, dass** dieses auf einer globalen Zusammensetzung von Monomeren basiert, umfassend:
- als Monomer c) mindestens einen von: einem (Meth)acrylester eines C₈-C₁₄-Alkohols, vorzugsweise C₁₂, und/oder mindestens einem Vinylester einer C₈-C₁₄-Säure, vorzugsweise C₉-C₁₂, und
- als Monomer a) mindestens eines von: Vinylcarbonaten und ethylenisch ungesättigten Estern, die eine cyclische Carbonatgruppe tragen, insbesondere von (Meth)acrylat, Itaconat, Maleat, Fumarat, Glycerincarbonattetrahydrophthalat, bevorzugter Glycerincarbonat(meth)acrylat.

7. Harz nach einem der Ansprüche 1 bis 6,
**dadurch gekennzeichnet, dass** dieses eine zahlenmittlere Molekularmasse Mn, gemessen durch GPC (Polystyrol-Äquivalent in THF), von 2 000 bis 10 000 g/mol, vorzugsweise 3 000 bis 10 000 g/mol, bevorzugter von 3 000 bis 8 000 g/mol und noch bevorzugter von 3 000 bis 7 000 g/mol aufweist.

8. Harz nach einem der Ansprüche 1 bis 7,
**dadurch gekennzeichnet, dass** dieses in der Form einer Lösung in einem oder mehreren organischen, vorzugsweise polaren, Verdünnungsmittelns ist, mit einem Harzgehalt von 70 bis 95 %, vorzugsweise von 80 bis 95 %.

9. Harz nach Anspruch 8,
**dadurch gekennzeichnet, dass** das organische Verdünnungsmittel ein reaktives Verdünnungsmittel ist, und dass es mindestens zwei reaktive Funktionen mit einem primären oder sekundären Amin trägt, wobei die Funktionen vorzugsweise ausgewählt sind aus: Hydroxylen, insbesondere für eine Reaktion mit Melaminen und/oder Acetoacetaten und/oder Epoxiden und/oder ethylenischen Unsättigungen, wobei diese Letzteren durch Michael-Addition mit dem Amin reagieren können.

10. Harz nach einem der Ansprüche 1 bis 9,
**dadurch gekennzeichnet, dass** dieses mindestens ein Acryl-, Vinyl- oder Vinyl-Acryl-Copolymer umfasst, das der Definition des Harzes entspricht.

11. Harz nach Anspruch 10,
**dadurch gekennzeichnet, dass** dieses eine Mischung von mindestens zwei verschiedenen Copolymeren P1 und P2 ist, die insbesondere ausgewählt sind aus Acryl-, Vinyl- oder Vinyl-Acryl-Copolymeren, wobei:
P1: von 50 bis 95 Gew.-%, vorzugsweise von 60 bis 95 Gew.-%, im Verhältnis zum Gesamtgewicht der beiden Copolymere, eines ersten Copolymers P1, das kein carboxyliertes ethylenisch ungesättigtes Monomer gemäß b) umfassen kann, vorzugsweise das carboxylierte Monomer gemäß b) nicht umfasst,
P2: von 5 bis 50 Gew.-%, vorzugsweise von 5 bis 40 Gew.-%, eines zweiten Copolymers, das mindestens ein carboxyliertes ethylenisch ungesättigtes Monomer gemäß b) umfasst,
wobei P1 hydrophober ist als P2, wobei P1 einen Säureindex von Null oder kleiner als jenem von P2 von mindestens 10 mg KOH/g aufweist, und wobei die beiden Copolymere ± 1 % denselben Gehalt an cyclischen Carbonatgruppen aufweisen.

12. Harz nach Anspruch 11,
**dadurch gekennzeichnet, dass** die Copolymere bei ± 5°C im Wesentlichen identische Glasübergangstemperaturen Tg1 und Tg2 aufweisen, und dass sie sich in einem Bereich von -40 bis 120°C befinden, wobei die Tg durch DSC nach zwei Passagen von -50°C bis 110°C bei 10°C/min gemessen werden.

13. Harz nach Anspruch 11,
**dadurch gekennzeichnet, dass** die Copolymere verschiedene Glasübergangstemperaturen aufweisen, wobei vorzugsweise eines der Copolymere P1 und P2 eine höhere Tg, insbesondere über 40°C, bevorzugter über 40° und nicht über 120°C aufweist, und das andere eine niedrigere Tg aufweist, wobei die Tg durch DSC nach zwei Passagen von -50°C bis 110°C bei 10°C/min gemessen werden.

14. Harz nach Anspruch 13,
**dadurch gekennzeichnet, dass** das Copolymer, das die höhere Tg aufweist, das Copolymer P1 ist, wie gemäß Anspruch 11 definiert, und dass das Copolymer, das die niedrigere Tg aufweist, das Copolymer P2 ist, wie gemäß Anspruch 11 definiert.

15. Harz nach Anspruch 13,
**dadurch gekennzeichnet, dass** das Copolymer, das die höhere Tg aufweist, das Copolymer P2 ist, wie gemäß Anspruch 11 definiert, und dass das Copolymer, das die niedrigere Tg aufweist, das Copolymer P1 ist, wie gemäß Anspruch 11 definiert.

16. Wässrige Harzdispersion,
**dadurch gekennzeichnet, dass** diese mindestens ein Harz, wie gemäß einem der Ansprüche 1 bis 15 definiert, in einer vollständig oder teilweise neutralisierten Form umfasst.

17. Dispersion nach Anspruch 16,
**dadurch gekennzeichnet, dass** die Dispersion keinen grenzflächenaktiven Stoff aufweist.

18. Dispersion nach Anspruch 16 oder 17,
**dadurch gekennzeichnet, dass** diese mit einem Neutralisationsgrad von mindestens 30 % und vorzugsweise von mindestens 40 % im Verhältnis zu den Carboxyl-Funktionen oder -Gruppen des Harzes teilweise neutralisiert ist.

19. Verfahren zur Herstellung einer wässrigen Dispersion, wie gemäß einem der Ansprüche 16 bis 18 definiert,
**dadurch gekennzeichnet, dass** dieses einen Schritt der Herstellung des Harzes, wie gemäß einem der Ansprüche 1 bis 15 definiert, in der Form einer Lösung in einem oder mehreren organischen, vorzugsweise polaren, Verdünnungssmitteln umfasst, gefolgt von einem Schritt der teilweisen oder vollständigen Neutralisation und einem Schritt der Dispersion in Wasser, mit gegebenenfalls einem Schritt der endgültigen Eliminierung des organischen Verdünnungsmittels, insbesondere wenn es nicht reaktiv ist mit einem primären oder sekundären Amin, und einem Schritt der Einstellung des Feststoffgehalts und der Viskosität durch Verdünnung in Wasser.

20. Verfahren nach Anspruch 19,
**dadurch gekennzeichnet, dass** dieses die folgenden Schritte umfasst:
i) Herstellung eines Harzes, wie gemäß einem der Ansprüche 1 bis 15 definiert, in Lösung in einem oder mehreren organischen, vorzugsweise polaren, Verdünnungsmitteln,
ii) gegebenenfalls Verdünnung des Harzes, um die Viskosität der Harzlösung einzustellen,
iii) teilweise oder vollständige Neutralisation der Acidität des Harzes mit einer organischen Base, die unter den Neutralisationsbedingungen selektiv die Säuregruppen (Carboxylgruppen) des Harzes neutralisiert, ohne die anderen (als Säure-) Gruppen des Harzes zu beeinflussen,
iv) Herstellung einer Dispersion der Harzlösung in einem wässrigen Medium,
v) gegebenenfalls Eliminierung des organischen Verdünnungsmittels, insbesondere wenn es nicht reaktiv ist mit einem Amin, vorzugsweise durch Einbringen von Wasserdampf (oder "Strippen" mit Wasserdampf) oder Einbringen von ("Strippen" mit) einem Inertgas,
vi) Einstellung der endgültigen Verdünnung oder des endgültigen Feststoffgehalts.

21. Verfahren nach Anspruch 20,
**dadurch gekennzeichnet, dass** der Schritt iv) einen Schritt des Zusatzes von Wasser zu der Harzlösung bis zur Phasenumkehr umfasst, gefolgt von einer Einstellung der Verdünnung im Verhältnis zum gesuchten Feststoffgehalt.

22. Vernetzbare wässrige Zusammensetzung eines organischen Bindemittels,
**dadurch gekennzeichnet, dass** diese mindestens ein Harz, wie gemäß einem der Ansprüche 1 bis 15 definiert, oder mindestens eine wässrige Harzdispersion, wie gemäß einem der Ansprüche 16 bis 18 definiert, umfasst.

23. Zusammensetzung nach Anspruch 22,
**dadurch gekennzeichnet, dass** diese außerdem ein Vernetzungsmittel umfasst, ausgewählt aus primären und/oder sekundären Polyaminen mit einer Funktionalität von mindestens 2.

24. Verwendung mindestens eines Harzes, wie gemäß einem der Ansprüche 1 bis 15 definiert,
**dadurch gekennzeichnet, dass** es sich um eine Verwendung bei der Herstellung von vernetzten Polyurethanen ohne die Verwendung von Polyisocyanat aus vernetzbaren Zusammensetzungen, wie gemäß einem der Ansprüche 22 oder 23 definiert, handelt.

25. Verwendung nach Anspruch 24,
**dadurch gekennzeichnet, dass** diese Anwendungen in wässrigen Beschichtungen umfasst, insbesondere in Anstrichen, Lacken, Tinten, Haftmitteln, Klebern, Dichtmassen, einer Faser- und Textilbehandlung.

26. Vernetztes Polyurethan,
**dadurch gekennzeichnet, dass** dieses aus der Vernetzung mindestens eines Harzes, wie gemäß einem der Ansprüche 1 bis 15 definiert, mit einem Polyamin mit einer Funktionalität von mindestens 2 oder aus einer vernetzbaren wässrigen Zusammensetzung, wie gemäß einem der Ansprüche 22 oder 23 definiert, erhalten wird.

## Claims

1. Organic resin that is soluble in organic media, **characterized in that** it comprises structural units in its overall composition obtained from:
a) at least one ethylenically unsaturated monomer carrying a cyclic carbonate group, preferably selected from vinyl carbonates or ethylenically unsaturated esters carrying a cyclic carbonate group,
b) at least one ethylenically unsaturated monomer carrying at least one carboxylic acid group,
c) at least one ethylenically unsaturated monomer with a hydrophobic nature having a hydrophobic value, estimated by the logarithm of the partition coefficient between octanol and water logKow of at least 3, preferably at least 3.5, more preferably at least 4 and still more preferably at least 4.5, with logKow being calculated using the 'Estimation Program Interface Suite KowWin 4.11' software from Syracuse Research Corporation (SRC) according to the methodology described by W. M. Meylan and P. H. Howard in 1995 in "Atom/fragment contribution method for estimating octanol-water partition coefficients" in Pharm. Sci. 84: 83-9, and said monomer c) comprising at least one linear or branched aliphatic group comprising at least 6 carbon atoms and/or at least one cycloaliphatic structure with at least 6 carbon atoms, preferably from 6 to 12 carbon atoms,
d) optionally, at least one other ethylenically unsaturated monomer that is different from said monomers a), b) or c) and does not carry any group that is susceptible of reacting with a carbonate group or carboxylic acid group, but also no group that is susceptible of reacting with a functional group of another monomeric component of said resin, all cross-linking reactions in the preparation of said resin being excluded,
overall, said resin having:
- an acid value of at least 10, preferably 15 to 50, more preferably 15 to 40 mg KOH/g with respect to the dry resin, and
- a cyclic carbonate group content of 0.5 to 3.5 mmol/g, preferably 0.9 to 3 mmol/g, more preferably 1.5 to 2.5 mmol/g with respect to the dry resin, and preferably said resin having an overall hydrophobic value, based on the logarithm of the partition coefficient between octanol and water, in particular estimated by the weighted average of logKow over the entirety of the monomeric constituents, of at least 1.5, preferably at least 1.6, with logKow of the monomeric constituents being calculated as defined above for monomer c).

2. Resin according to Claim 1, **characterized in that** said monomer c) comprises at least one linear or branched aliphatic group containing at least 12 carbon atoms, more particularly 12 to 36 carbon atoms and/or at least one cycloaliphatic structure containing 6 to 12 carbon atoms.

3. Resin according to Claim 1 or Claim 2, **characterized in that** said monomer c) is selected from: at least one alkyl (meth)acrylate, said alkyl, which may be linear or branched, containing at least 6 carbon atoms, preferably at least 12 carbon atoms, more particularly 12 to 36 carbon atoms, or from at least one ester of C₁₈ to C₃₆ fatty acids with a hydroxyalkyl (meth)acrylate, or at least one ester of a vinyl alcohol with at least one linear or branched acid containing at least 6 carbon atoms, preferably at least 9 carbon atoms, more particularly 9 to 36 carbon atoms.

4. Resin according to Claim 1 or Claim 2, **characterized in that** said monomer c) is selected from at least one monomer from the group composed of: lauryl, isodecyl, decyl, dodecyl, stearyl, 2-ethylhexyl, isooctyl, 2-octyl, 2-octyldecyl, 2-octyldodecyl, tridecyl, (meth) acrylate, or esters of dimers (C₃₆) of fatty acids with a hydroxyalkyl (meth)acrylate, the glycidyl (meth)acrylate ester of a saturated branched C₁₀ carboxylic acid, in particular highly branched C₁₀, or the glycidyl (meth)acrylate ester of a branched C₉ carboxylic acid, in particular highly branched C₉, or vinyl esters of branched C₁₀ carboxylic acid, in particular highly branched C₁₀, or vinyl esters of saturated branched C₉ carboxylic acid, in particular highly branched C₉, or vinyl esters of C₁₈ fatty acids, or dimers (C₃₆) of fatty acids or monomers with a cycloaliphatic structure, in particular selected from: isobornyl, isophoryl, tertiobutylcyclohexyl, 3,3,5-trimethylcyclohexyl (meth)acrylate, cyclohexyl methacrylate, or esters of monoalkyl esters, with C₁ to C₁₈ alkyl, of m, p-hexahydrophthalic acid (or 1,3 or 1,4-cyclohexane dioic acid monoesterified with C₁ to C₁₈ alkyl) with hydroxyalkyl (meth)acrylates.

5. Resin according to Claim 1 or Claim 2, **characterized in that** it comprises hydrophobic monomers selected from methacrylic esters of linear or branched C₆ to C₃₆ alcohols, more preferably C₆ to C₁₈ and still more preferably C₈ to C₁₄ and/or vinyl esters of carboxylic acids with a linear or branched C₆ to C₃₆ chain, more preferably C₆ to C₁₈ and still more preferably C₈ to C₁₄.

6. Resin according to one of Claims 1 to 5, **characterized in that** it is based on an overall composition of monomers comprising:
as monomer c), at least one selected from: a (meth) acrylic ester of a C₈ to C₁₄ alcohol, preferably C₁₂ and/or at least one vinyl ester of a C₈ to C₁₄ acid, preferably C₉ to C₁₂, and
- as monomer a), at least one selected from: vinyl carbonates and ethylenically unsaturated esters carrying a cyclic carbonate group, in particular from glycerol carbonate (meth)acrylate, itaconate, maleate, fumarate or tetrahydrophthalate, more preferably glycerol carbonate (meth)acrylate.

7. Resin according to one of Claims 1 to 6, **characterized in that** it has a number average molecular mass Mn, measured by GPC (in polystyrene equivalents, in THF) of 2 000 to 10 000 g/mol, preferably 3 000 to 10 000 g/mol, more preferably 3 000 to 8 000 g/mol and still more preferably 3 000 to 7 000 g/mol.

8. Resin according to one of Claims 1 to 7, **characterized in that** it is in the form of a solution in one or more organic diluents, preferably polar, with a resin content of 70% to 95%, preferably 80% to 95%.

9. Resin according to Claim 8, **characterized in that** said organic diluent is a reactive diluent and carries at least two functions that are reactive with a primary or secondary amine; preferably, said functions are selected from: hydroxyls, in particular for reaction with melamines and/or acetoacetates and/or epoxides and/or ethylenically unsaturated bonds, these latter being capable of reacting with said primary or secondary amine by Michael addition.

10. Resin according to one of Claims 1 to 9, **characterized in that** it comprises at least one acrylic, vinyl or vinyl-acrylic copolymer corresponding to the definition of said resin.

11. Resin according to Claim 10, **characterized in that** it is a blend of at least two different copolymers P1 and P2, in particular selected from acrylic, vinyl or vinyl-acrylic copolymers, with:
P1: 50% to 95% by weight, preferably 60% to 95% by weight with respect to the overall weight of said two copolymers of a first copolymer P1 possibly not comprising a carboxylated ethylenically unsaturated monomer in accordance with b), preferably not comprising said carboxylated monomer in accordance with b),
P2: 5% to 50% by weight, preferably 5% to 40% by weight of a second copolymer omprising at least one carboxylated ethylenically unsaturated monomer in accordance with b),
in which P1 is more hydrophobic than P2, P1 having a zero or lower acid value than that of P2, of at least 10 mg KOH/g and the two copolymers having ± 1% the same number of cyclic carbonate groups.

12. Resin according to Claim 11, **characterized in that** said copolymers have glass transition temperatures Tg1 and Tg2 that are substantially identical, ± 5%, and which are in the range from -40°C to 120°C, said Tgs being measured by DSC after two passes from -50°C to 110°C at 10°C/min.

13. Resin according to Claim 11, **characterized in that** said copolymers have different glass transition temperatures, preferably with one of said copolymers P1 or P2 having a high Tg, in particular more than 40°C, more preferably more than 40°C and not exceeding 120°C, and the other having a lower Tg, said Tgs being measured by DSC after two passes from -50°C to 110°C at 10°C/min.

14. Resin according to Claim 13, **characterized in that** said copolymer with said high Tg is said copolymer P1 as defined in Claim 11 and said copolymer with said lower Tg is said copolymer P2 as defined in Claim 11.

15. Resin according to Claim 13, **characterized in that** said copolymer with said high Tg is the copolymer P2 as defined in Claim 11 and said copolymer with said lower Tg is the copolymer P1 as defined in Claim 11.

16. Aqueous dispersion of resin, **characterized in that** it comprises at least one resin as defined in one of Claims 1 to 15, in the totally or partially neutralized form.

17. Dispersion according to Claim 16, **characterized in that** said dispersion is free of surfactant.

18. Dispersion according to Claim 16 or Claim 17, **characterized in that** it is partially neutralized with a degree of neutralization of at least 30%, preferably at least 40% with respect to the carboxylic functions or groups in said resin.

19. Process for the preparation of an aqueous dispersion as defined in one of Claims 16 to 18, **characterized in that** it comprises a step for preparation of said resin as defined in one of Claims 1 to 15 in the form of a solution in one or more organic diluents, preferably polar, followed by a step for partial or total neutralization and then by a step for dispersion in water, optionally with a final step for elimination of said organic diluent, in particular if it is non-reactive, with a primary or secondary amine and a step for adjusting the solids content and the viscosity by dilution in water.

20. Process according to Claim 19, **characterized in that** it comprises the following steps:
i) preparing a resin as defined in one of Claims 1 to 15, in solution in one or more organic diluent(s), preferably polar,
ii) optionally, diluting said resin in order to adjust the viscosity of the solution of resin,
iii) partially or totally neutralizing the acidity of said resin, with an organic base that, under the neutralization conditions, selectively neutralizes the acid groups (carboxylic) of said resin without affecting the other (than acid) groups of said resin,
iv) preparing a dispersion of said solution of resin in an aqueous medium,
v) optionally, eliminating said organic diluent, in particular if it is not reactive with a primary or secondary amine, preferably by entrainment in steam (also known as steam stripping) or entrainment (stripping) with an inert gas,
vi) adjusting the final dilution or the final solids content.

21. Process according to Claim 20, **characterized in that** said step iv) comprises a step for adding water to said solution of resin, until phase inversion occurs, followed by adjusting the dilution having regard to the envisaged solids content.

22. Cross-linkable aqueous composition of organic binder, **characterized in that** it comprises at least one resin as defined in one of Claims 1 to 15 or at least one aqueous dispersion of resin as defined in one of Claims 16 to 18.

23. Composition according to Claim 25, **characterized in that** it further comprises a cross-linking agent selected from primary and/or secondary polyamines with a functionality of at least 2.

24. Use of at least one resin as defined in one of Claims 1 to 15, **characterized in that** it is used in the preparation of cross-linked polyurethanes without the use of polyisocyanate starting from cross-linkable compositions as defined in Claims 22 or 23.

25. Use according to Claim 24, **characterized in that** it concerns applications in aqueous coatings, in particular in paints, varnishes, inks, adhesives, glues, sealants, fiber and textile treatments.

26. Cross-linked polyurethane, **characterized in that** it results from cross-linking at least one resin as defined in one of Claims 1 to 15 with a polyamine having a functionality of at least 2 or starting from a cross-linkable aqueous solution as defined in either of Claims 22 and 23.
